# EUROPEAN PATENT APPLICATION

(11) **EP 2 343 759 A1**
(43) Date of publication of application: **13.07.2011**
(21) Application number: 09816242.3
(22) Date of filing: 28.09.2009
(51) Int. Cl.: H01M 4/58, H01M 2/16, H01M 4/62, H01M 4/96

(54) **BATTERY COMPONENT AND BATTERY**

(30) Priority: 29.09.2008 JP 2008249851; 10.12.2008 JP 2008314945; 04.08.2009 JP 2009181242
(71) Applicant: The Nisshin OilliO Group, Ltd., Tokyo 104-8285 (JP)
(72) Inventor: GOTOU, Hiroyuki, Tokyo 104-8285 (JP); SAEKI, Akinori, Kawasaki-shi Kanagawa 215-0021 (JP)
(74) Representative: Hodsdon, Stephen James
(86) International application number: PCT/JP2009/066777
(87) International publication number: WO 2010/035828

(57) **Abstract**

Disclosed is a lithium ion battery that can easily be manufactured and comprises a negative-electrode active material formed of a burned product of any of soybean hulls, rapeseed meal, cotton hulls, sesame, and cotton seeds.

The burned product of any of the soybean hulls, rapeseed meal, cotton hulls, sesame, and cotton seeds is ground to obtain a negative-electrode active material having a carbon content of not less than 70%. The inner skin of the burned product has a net-like structure. The negative-electrode active material is coated onto the both sides of a metal foil to manufacture a negative electrode for a lithium ion battery. A lithium ion battery using the negative electrode is then manufactured.

## Description

### FIELD OF THE INVENTION

The present invention is related to a battery component and battery, and more particularly, it is related to a negative-electrode active material of various batteries including lithium ion batteries and fuel cells, and a battery comprising the same.

### BACKGROUND OF THE INVENTION

Patent Document 1 discloses a technology that uses a coffee bean burned product as a negative-electrode active material for a lithium ion battery. This technology makes a negative-electrode active material for a lithium ion battery by using bacteria to dry waste coffee beans and then carbonizing the same. According to this technology, waste coffee beans with high water content can be dried with almost no required energies or expenses by using the fermentation heat from bacteria, and thus it is regarded as excellent in terms of the charge-discharge capacity as well as in terms of the charge-discharge efficiency.

Patent Document 1: JPA1999-283620

### DISCLOSURE OF THE INVENTION

### PROBLEM TO BE SOLVED BY THE INVENTION

However, the technology disclosed in Patent Document 1 essentially requires cumbersome tasks such as drying waste coffee beans by using bacteria.

Therefore, one of the problems to be solved by the present invention is to manufacture a negative-electrode active material for a battery without the drying task using bacteria.

Other than the negative-electrode active material, a battery also comprises battery components that use carbon as a material. Those are, for example, a positive-electrode active material, conductive agent used for an electrode active material, and separator, etc.

Therefore, another problem to be solved by the present invention is to manufacture these battery components.

### MEANS OF SOLVING THE PROBLEMS

In order to solve the above problems, the battery component of the present invention comprise a burned material of any of soybean hulls, rapeseed meal, cotton hulls, sesame, and cotton seeds. Specifically, the above burned material may solely be used to form the battery component, or it may be mixed with other carbon such as carbon black, and further it may be mixed with a required additive etc. to form the battery component.

Here, the inner skin of the burned product has a net-like structure.

In addition, the battery of the present invention comprises the above battery component. Although the battery component specifically refers to a positive-electrode active material, negative-electrode active material, or a separator located therebetween, it may refer to any components containing carbon in addition to those.

### EMBODYMENT OF THE INVENTION

Referring to drawings, embodiments according to the present invention is described hereinafter.

This embodiment first manufactures a burned material by burning and carbonizing any of soybean hulls, rapeseed meal, cotton hulls, sesame, and cotton seeds. Today, the manufacture of food oil etc., for example, from soybeans as a raw material results in causing a large amount of soybean hulls and rapeseed meal, etc. Although most of those are reused as fodder for live stock or agricultural fertilizer, further usages have been sought.

It has been found that the burned material manufactured by burning and carbonizing any of soybean hulls, rapeseed meal, cotton hulls, sesame, and cotton seeds has a component analysis and specific volume resistivity similar to those of soybean hulls etc. Therefore, the burned material from those raw materials can be considered to be suitable as a material for secondary batteries likewise.

As a result of dedicated study from the aspect of ecology, as a way of further reusing soybean hulls etc., it was found that the burned material obtained by burning soybean hulls etc. can be beneficially used as a negative-electrode active material for a lithium ion battery. Hereinafter, the burned material obtained by burning soybean hulls will be explained in relation to lithium ion batteries.

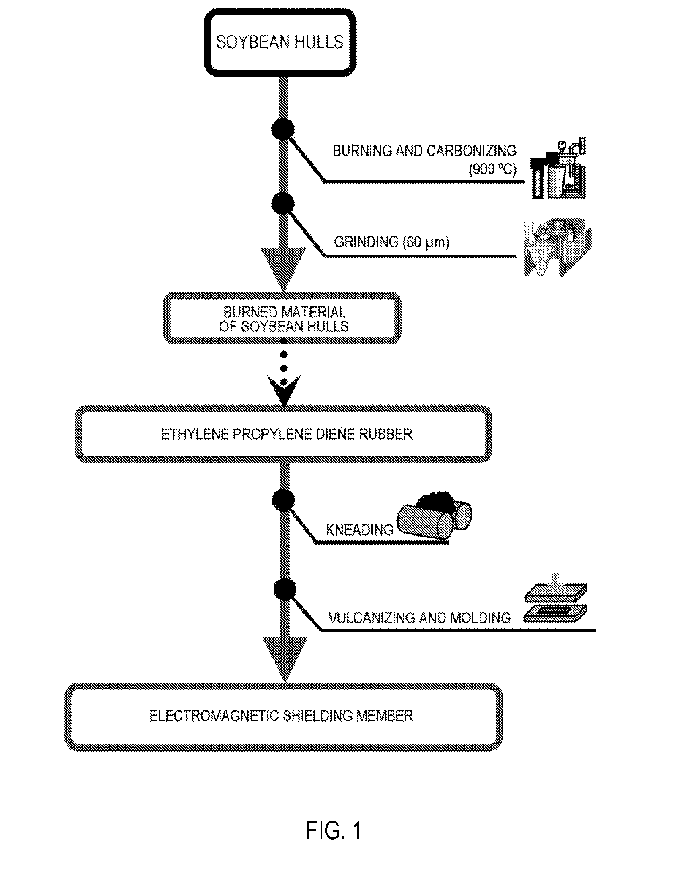

Fig. 1 shows a schematic production process diagram of the negative-electrode active material of the lithium ion battery of Embodiment 1 according to the present invention. Fig. 1 additionally shows the process for performing after-mentioned various tests and measurements for the above burned material.

First, raw soybean hulls caused by manufacturing a food oil etc., that is, soybean hulls in a state of before burning are set in a carbonization apparatus including an incinerator and kiln etc., and are then heated to 300 °C - 3000 °C (for example, 900 °C) at a speed of 1 °C - 50 °C per minute in an inert gas atmosphere including nitrogen or in a vacuum condition. Technically speaking, the temperature of 3000 °C is in fact a temperature required for the graphitization process. Then, this temperature is maintained for about 1-30 hours so that the burning and carbonizing process is performed.

Next, the burned soybean hulls are ground and put through a sieving process, wherein sieving with, for example, a 106 µm by 106 µm mesh. Thereby, a burned material of soybean hulls wherein about 80% of the total burned material of soybean hulls becomes less than 85 µm is obtained, and thus a burned material of soybean hulls with 60 µm, for example, in median diameter is obtained. The median diameter was measured by a laser diffraction particle size analyzer, SALD-7000 made by SHIMADZU Corporation. The median diameter may be, for example, approx. 4 µm to approx. 80 µm.

This burned product of soybean hulls is mixed with a known binding agent, and is coated onto both sides of a metal foil connected to the negative-electrode lead of a lithium ion battery and is then dried to manufacture a negative-electrode for the lithium ion battery.

Next, the following measurements etc. have been carried out for "raw soybean hulls" and "burned material of soybean hulls".

(1) Component analysis of the "raw soybean hulls" and "burned material of soybean hulls",
(2) Tissue observation of the "raw soybean hulls" and "burned material of soybean hulls",
(3) Conductivity test for the "burned material of soybean hulls",
(4) Evaluation of the charge-discharge characteristics of a lithium battery (button buttery) that uses the "burned material of soybean hulls" as the negative-electrode material.

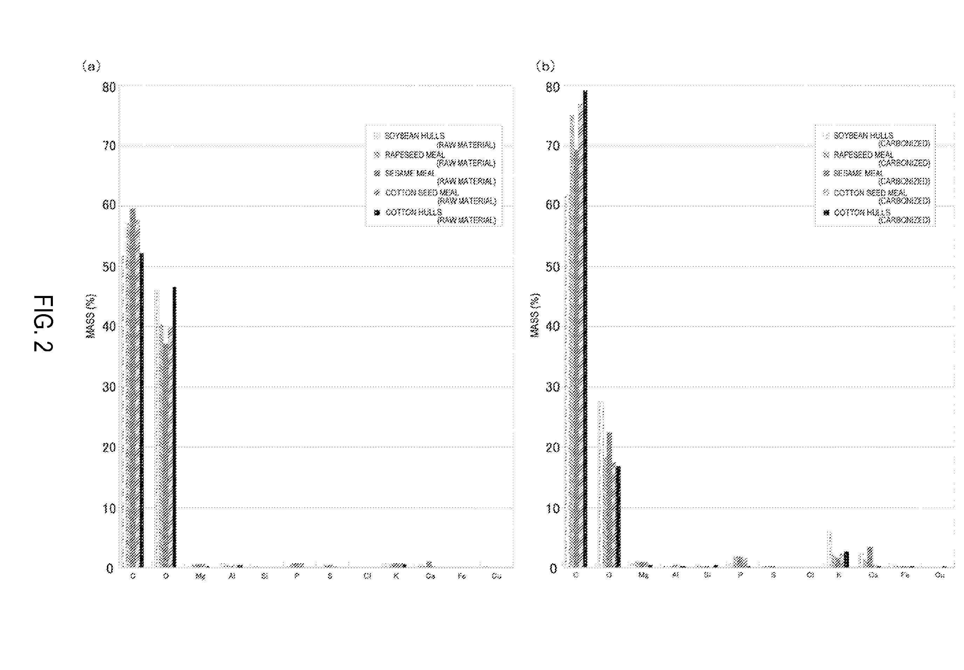

Fig. 2(a) shows a chart indicating the result of the component analysis based on the ZAF quantitative analysis method for soybean hulls, rapeseed meal, sesame meal, and cotton seed meal, and cotton hulls before burning. Fig. 2(b) shows a chart indicating the result of the component analysis based on the ZAF quantitative analysis method for soybean hulls etc. shown in Fig.2(a) after burning. Although the production conditions for the "burned material of soybean hulls" are as shown in Fig. 1, the "prescribed temperature" and "median diameter" were respectively set to 900 °C and 60 µm.

As shown in Fig.2(a), the soybean hulls before burning are composed of the carbon (C) component and oxygen (O) component roughly half-and-half, respectively at 51.68% and 45.98%. Other inorganic components etc. account for the rest of 2.35%. According to the component analysis based on the organic trace element analysis method, the carbon (C) component, hydrogen (H) component, and nitrogen (N) component were respectively 39.98%, 6.11 %, and 1.50%.

Thus, it has been found that the soybean hulls before burning are essentially rich in carbon component. Similar to the soybean hulls before burning, the rapeseed meal etc. before burning is composed of the carbon (C) component and oxygen (O) component roughly half-and-half. Specifically, it has been found that "C" shown in Fig. 2(a) accounts for 50% - 60% for all plants. It has also been found that all plants are rich in "O" second only to "C".

In addition, as shown in Fig. 2(b), the soybean hulls after burning comprise the carbon (C) component of 61.73% being increased by a factor of nearly 1.5 from those before burning. According to the component analysis based on the organic trace element analysis method, the carbon (C) component, hydrogen (H) component, and nitrogen (N) component were respectively 73.57%, 0.70%, and 1.55%. Thus, it has been found that the carbon component has been increased by burning.

In addition, the oxygen (O) component in the soybean hulls after burning was decreased to nearly half by burning. Although others have been variously changed (ranging from that reduced to half to that increased by a factor of 5), any of the changes were within several % of the total. It has also been read that the rapeseed meal etc. after burning somewhat tends to increase the carbon (C) component and to reduce the oxygen (O) component just like the soybean hulls after burning. Regarding the measurement target elements, none of them showed a distinctive change in quantity except for "C" and "O" for all plants, just like the case of soybean hulls.

As described above, the results of the component analysis shown in Fig. 2(a) and Fig. 2(b) can generally be evaluated as the same result. This is considered to be attributable to the fact that soybean hulls and rapeseed meal etc. are no more than plants. However, since rapeseed meal, sesame meal and cotton seed meal have the common feature of being oil meal, it is perceived that those charts are similar to each other in terms of, for example, having a relatively higher "N" and having a relatively lower increase rate in "C" before and after burning.

In contrast, since soybean hulls and cotton hulls have the common feature of being hulls, it is perceived that those charts are similar to each other in terms of, for example, having a relatively lower "N" and having a relatively higher increase rate in "C" before and after burning. In addition, as a result of the organic element analysis method, cotton hulls are the highest (approx. 83%) in terms of "C", while sesame meal is the lowest (approx. 63%).

It has been known that those in which cellulose and some minerals are combined together in a balanced manner are suitable for the negative-electrode active material for a lithium ion battery. Since the burned material of soybean hulls of this embodiment comprises cellulose and some minerals combined together in a balanced manner, it can preferably be used for the negative-electrode active material for a lithium ion battery.

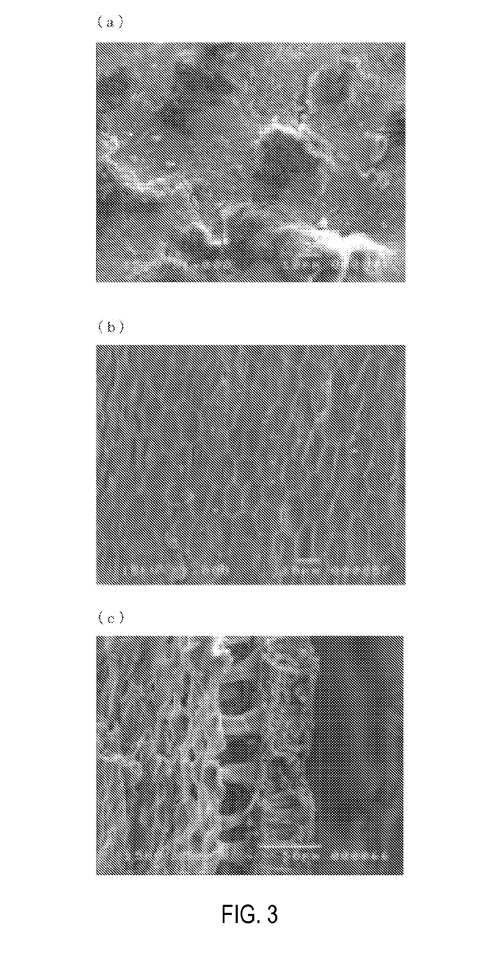

Fig. 3 shows Scanning Electron Microscope (SEM) pictures indicating the result of the tissue observation of "raw soybean hull". Fig. 3(a) - Fig. 3(c) respectively show a picture of the outer skin of a "raw soybean hull" taken at a magnification of 1000, a picture of the inner skin taken at a magnification of 1000, and a picture of the cross-section taken at a magnification of 500. The cross-section refers to the orthogonal cross-section near the boundary face between the outer skin and the inner skin.

The outer skin of the raw soybean hull shown in Fig. 3(a) functions to somehow block the moisture between the outside and the inner skin. As long as this picture of the outer skin is seen, depressions and projections seem to be scattered around the surface in the overall shape.

The inner skin of the raw soybean hull shown in Fig.3(b) has a net-like structure. As long as this picture of the inner skin is seen, a gentle undulation with less elevation differences is seen in the overall shape.

As long as this picture of the cross-section is seen, the cross-section of the raw soybean hull shown in Fig. 3(c) seems to have a plurality of columnar structures wherein one end is attached to the outer skin and the other end is attached to the inner skin.

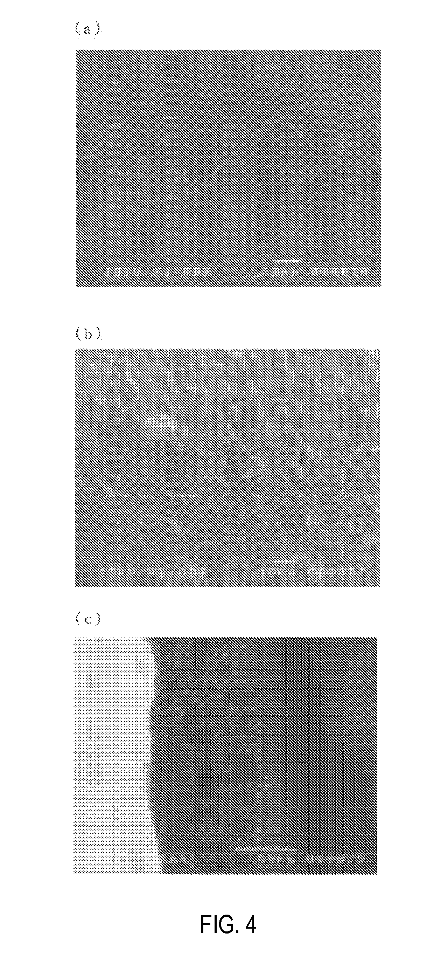

Fig. 4 shows SEM pictures indicating the result of the tissue observation of the "burned material of soybean hull". Fig. 4(a) - Fig. 4(c) respectively show a picture of the outer skin of the "burned material of soybean hull" taken at a magnification of 1000, a picture of the inner skin taken at a magnification of 1000, and a picture of the cross-section taken at a magnification of 500. Here, the burning temperature has been set to approx. 1500 °C in order to obtain the "burned material of soybean hull".

As in the overall shape, the outer skin of the burned material of soybean hull shown in Fig.4(a) seems to have no depressions and projections, which have been seen in the "raw soybean hull". However, the outer skin of the "burned material of soybean hull" was rough.

Although the inner skin of the burned material of soybean hull shown in Fig. 4(b) still shows a net-like structure, the net became finer due to the moisture loss. The inner skin of the "burned material of soybean hull" can also be evaluated as having a squashed net-like structure.

Although the cross-section of the burned material of soybean hull shown in Fig.4(c) still shows columnar structures, each columnar part has been narrowed with a reduced height, and the gaps have been significantly decreased. The columnar parts also seem to be squashed and changed into a fiber-like form.

Here, the lithium ion battery works as a power source by repeating charging and discharging as the lithium ions pass through a negative-electrode active material having a number of gaps. As described above, the burned material of soybean hull has a number of gaps due to its net-like structure. Thus, the burned material of soybean hull can be preferably used as a negative-electrode active material.

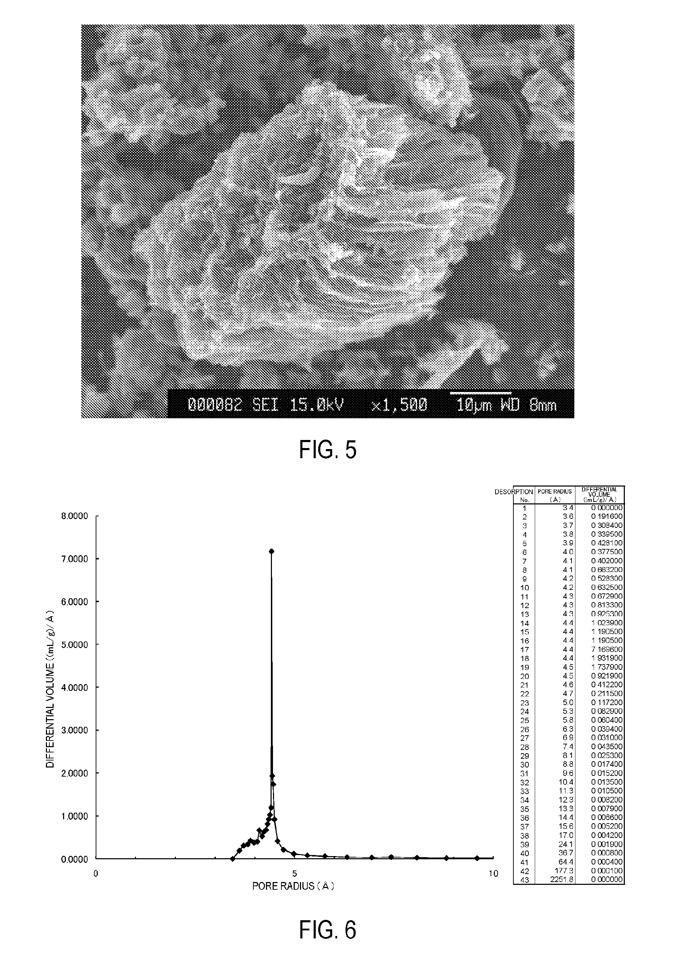

Regarding the above "burned material of soybean hull", Fig. 5 shows an SEM picture of a cross-section of the burned material of soybean hull, which was taken at a magnification of 1500. Here, the graphitization process has been carried out, wherein the burning temperature has been set to approx. 3000 °C in order to obtain the "burned material of soybean hull".

It has been found that the "burned material of soybean hull" shown in Fig. 5 has a texture of having more depressions and projections and a larger specific surface area in comparison with the one shown in Fig. 4(c). Regarding the "burned material of soybean hull" shown in Fig. 5, various physical properties were studied.

As a result, the carbon component (C) was approx. 100%, the nitrogen component (N) was less than 0.3%, the hydrogen component (H) was less than 0.3%, and further the oxygen component (O) was approx. 0.05%.

According to the X-Ray Fluorescent (XRF) analysis, magnesium (Mg), aluminum (Al), silicon (Si), phosphorus (P), sulfur (S), potassium (K), calcium (Ca), and iron (Fe) were not detected in the burned material of soybean hull. Moreover, this burned material of soybean hull has a specific surface area of approx. 5 m²/g, average particle diameter of 23.7 µm, bulk density (tap density) of 0.5132 g/ml, and a true density of 2.06 g/ml.

Table 1 shows a table indicating the evaluation regarding 3 types of production conditions for the burned material of soybean hull and various verifications thereof. Table 1 summarizes the specific surface area of the burned product of soybean hull based on 3 types of burning methods and the measurement results of the pore distribution. Here, the median diameters of Samples 1-3 were respectively set to 33.9 µm, 26.7 µm and 23.7 µm.

**Table 1**

| Plant-derived carbon | Sample weight (g) | Relative range of BET-plot | Measured area (m²) | Specific surface area (m²/g) | Profile of adsorption isotherm | Pore size distribution curve analyzed from adsorption process | Pore size distribution curve analyzed from desorption process | Remarks |
|---|---|---|---|---|---|---|---|---|
| Sample 1 | 1.1463 | 0.01 - 0.25 | 440.5 | 384.3 | The amount of gas adsorption is significantly large in the lower pressure range of adsorption process. | A sharp peak appears at 4.42 Å (pore radius). | Not measured | Since the lower pressure range in which a large gas adsorption occurs cannot be measured in desorption process, an analysis based on adsorption process is considered to be suitable. |
| Sample 2 | 0.5637 | 0.05 - 0.35 | 29.4 | 52.2 | Gas adsorption is clearly observed in the lower pressure range of adsorption process. | Although there is a peak at 8.29 Å (pore radius), the pore distribution is broadened to about 30 Å. | The analysis was terminated down to the lowest limit pore radius of 8.6 Å, and thus not showing a peak. | Due to the same consideration as above, an analysis based on adsorption process is suitable. In consideration of other 2 types of measurement results, if the measurement is carried out with an increased amount of sample, it is expected that the amount of gas adsorption increases in the lower pressure range of adsorption process, and thus a more accurate pore distribution with a sharper peak can be obtained. |
| Sample 3 | 7.7389 | 0.01 - 0.20 | 38.1 | 4.92 | Some gas adsorption is observed in the lower pressure range of adsorption process. Gas adsorption is clearly observed in the medium pressure range of desorption process, and a typical hysteresis appears | A sharp peak appears at 4.41 Å (pore radius) and a broad peak appears around 14.3 Å. | A sharp peak appears at 21.1 Å (pore radius). | Since the hysteresis observed in desorption process derives from pores at 21.1 Å, in the case of samples showing absorption isotherm and desorption isotherm like this sample, the analysis should basically be based on desorption process. However, since a gas adsorption in the lower pressure observed in adsorption process cannot be measured in desorption process, small pores such as 4.41 Å happen to fall outside the measurement range. Therefore, it is better to also consider the pore distribution analyzed by using adsorption process as needed. |

Fig. 6 shows a chart of the pore size distribution curve in the gas adsorption process for Sample 1 of Table 1. The lateral axis and vertical axis of Fig. 6 respectively represent the pore radius (Å) and the differential volume ((mL/g)/Å).

It should be noted that the burned material of soybean hulls at least shows a peak in the differential volume at a specific pore radius that is not seen in the burned materials of other plants in consideration of the verification results for Samples 2 and 3, which will be described below.

Normally, the burned materials of other plants do not show a single peak at a specific pore radius in the differential volume, and rather the chart of the pore size distribution curve results in a broad peak, or several peaks appear in the chart of the pore size distribution curve. Incidentally, it was found that the pore size of Sample 1 showed a peak in the differential volume at a pore radius of approx. 4.42 Å. See the chart in Fig. 6 for the detailed measurement results. In addition, the burned material of soybean hull still has a porous structure with a large specific surface area even after the graphitization process.

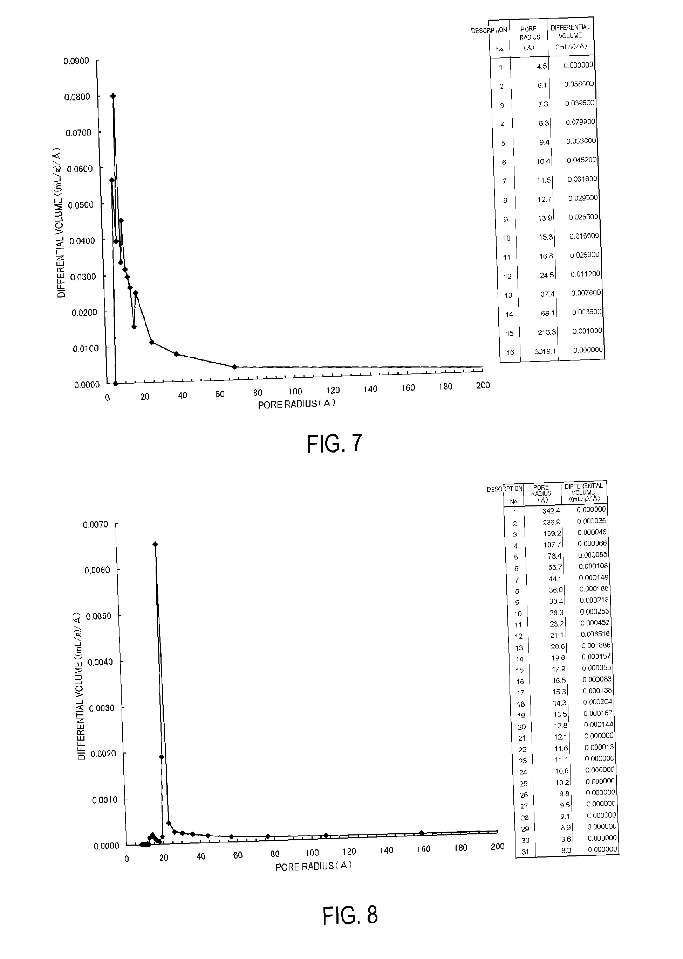

Fig. 7 shows a chart of the pore size distribution curve in the gas adsorption process for Sample 2 of Table 1. The lateral axis and vertical axis of Fig. 7 respectively represent the pore radius (Å) and the differential volume ((mL/g)/Å). Here, the differential volume also shows a peak at a specific pore radius. It was found that the pore size of Sample 2 showed a peak in the differential volume at a pore radius of approx. 8.29 Å. However, the pore distribution has become wider in the range of about 30 Å, and thus the peak is evaluated as slightly less sharp in comparison with the case of Sample 1. See the chart in Fig. 7 for the detailed measurement results.

Fig. 8 shows a chart of the pore size distribution curve in the gas desorption process for Sample 3 of Table 1. The lateral axis and vertical axis of Fig. 8 respectively represent the pore radius (Å) and the differential volume ((mL/g)/Å). Here, the differential volume also shows a peak at a specific pore radius. In the case of gas desorption process, it was found that the pore size of Sample 3 showed a peak in the differential volume at a pore radius of approx. 21.1 Å. See the chart in Fig. 8 for the detailed measurement results.

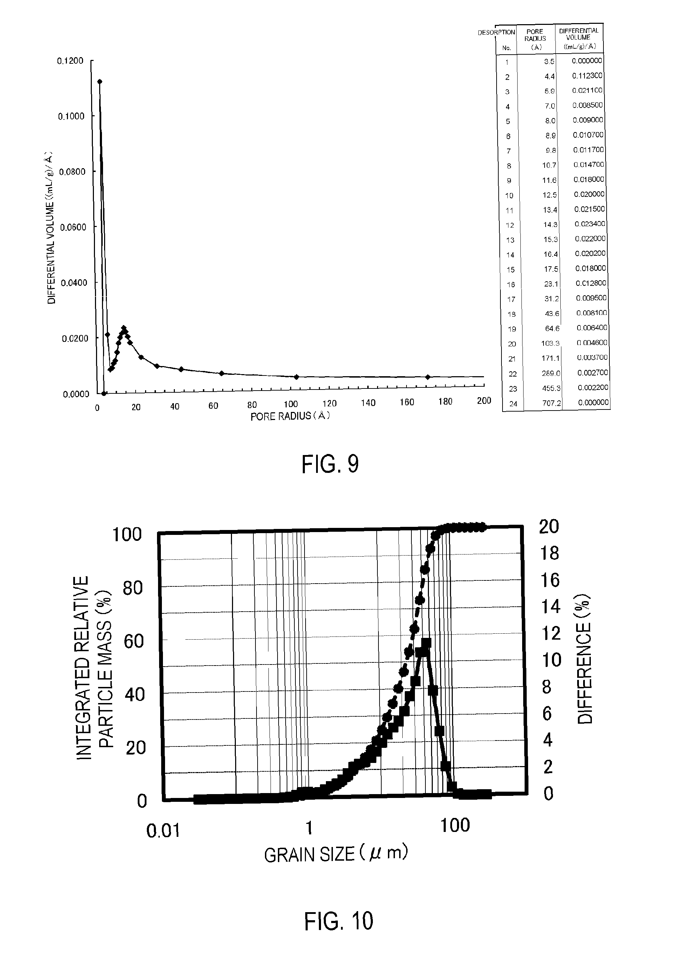

Fig. 9 shows a chart of the pore size distribution curve in the gas adsorption process for Sample 3 of Table 1. In the case of gas adsorption process, it was found that the pore size of Sample 3 showed a peak in the differential volume at a pore radius of approx. 4.41 Å. However, in the case of gas adsorption process, a broad peak was found at a pore radius of around 14.3 Å. Here, the differential volume also shows a peak at a specific pore radius. See the chart in Fig. 9 for the detailed measurement results.

As described above, the burned material of soybean hull has a characteristic of showing a peak in the differential volume at a specific pore radius regardless of the burning temperature. Therefore, when it is used as a negative-electrode active material of a secondary battery, the lithium ions are expected to uniformly pass through the net-like structure part, and thus the burned material of soybean hull is considered to have high charge-discharge efficiency as explained below.

Fig. 10 shows a relationship between the grain size (µm) of Sample 3 in Table 1 and the difference (%) and the integrated relative particle mass (%). The lateral axis of Fig. 10 indicates the grain size (diameter) of the burned material of soybean hull, while the right vertical axis indicates the difference corresponding to ■ plots, and the left vertical axis indicates the integrated relative particle mass corresponding to ● plots. It is found that those with a grain size of approx. 40 µm - 50 µm are largely distributed in the burned material of soybean hulls shown in Fig. 10. However, those with a grain size smaller than the above are relatively more contained, the average grain size results in approx. 23.7 µm as described above.

Next, test results of the lithium ion button battery of this embodiment are described. First, a lithium ion button battery comprising a negative-electrode using the burned material of soybean hulls of this embodiment, a positive-electrode using a lithium foil, and a liquid electrolyte of ethylene carbonate (EC) and dimethyl carbonate (DMC) at the ratio of 1:1 for which 1M LiPF6 has been used was manufactured. The burned material of soybean hulls used herein was that burned at 3000 °C, and its median diameter was 24 µm.

First, explaining the summary of the test results, the lithium ion button battery of this embodiment has been found to be superior to a lithium ion button battery using existing mesocarbon microbead (hereinafter referred to as "MCMB") electrodes in the following two points.

### 1. High initial charge-discharge capacity

The lithium ion button battery of this embodiment has been found to be superior to a lithium ion button battery using MCMB electrodes manufactured under the same conditions as the above described conditions in the initial charge-discharge capacity. Specifically, the first-time discharge capacity of the lithium ion button battery of this embodiment was 320.1 mAh/g in contrast to the first-time discharge capacity of the lithium ion button battery using MCMB electrode of 273.53 mAh/g. Since the theoretical capacity of graphite is said to be 372 mAh/g, the lithium ion button battery of this embodiment is found to be superior also in terms of the first-time discharge capacity.

Table 2 shows the charge-discharge capacity of the lithium ion button battery of this embodiment, and Table 3 shows the charge-discharge capacity of the lithium ion button battery using MCMB electrodes.

**Table 2**

| Number of cycles | Discharge capacity (mAh/g) | Charge capacity (mAh/g) | Efficiency (%) |
|---|---|---|---|
| 1 | 320.1 | 249.9 | 78.1 |
| 2 | 229.71 | 223.87 | 97.5 |
| 3 | 245.65 | 240.84 | 98 |
| 4 | 243.32 | 239.24 | 98.3 |

**Table 3**

| Number of cycles | Discharge capacity (mAh/g) | Charge capacity (mAh/g) | Efficiency (%) |
|---|---|---|---|
| 1 | 273.53 | 238.49 | 87.2 |
| 2 | 247.41 | 244.27 | 98.7 |
| 3 | 256.98 | 254.7 | 99.1 |
| 4 | 253.05 | 251.36 | 99.3 |

### 2. Nearly equal charge capacity even at a different discharge rate

Surprisingly, the lithium ion button battery of this embodiment was also found to have the same charge capacity at both C/6 rate (charge rate of 30 hours) and 2C rate (charge rate of 30 minutes). For reference, the charge capacity of the lithium ion button battery using MCMB electrodes at 2C rate obtained only 88% of that obtained at C/6 rate.

Next, the test results are concretely described. The negative-electrode of the lithium ion button battery of this embodiment was made from a slurry comprising 90% of the burned material of soybean hulls of this embodiment, 5% of acetylene black, and 5% of polymer. Similarly, the negative-electrode of the lithium ion button battery using comparative MCMB electrodes was made from slurry comprising 90% of MCMB 10-28, 5% of acetylene black, and 5% of polymer.

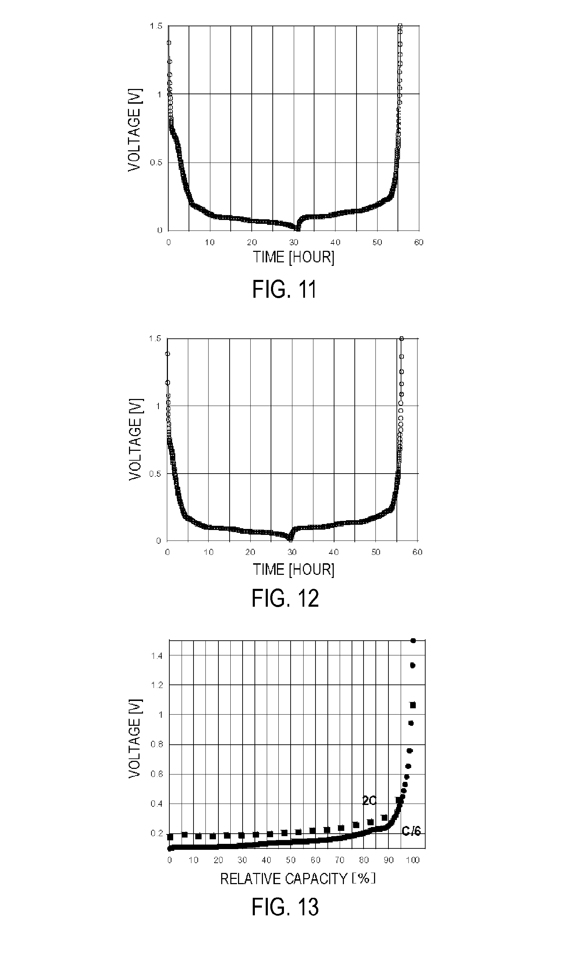

Fig. 11 shows a first-time charge-discharge curve of the lithium ion button battery of this embodiment. Fig. 12 shows a first-time charge-discharge curve of the lithium ion button battery using comparative MCMB electrodes. In Fig. 11 and Fig. 12, the lateral axis and vertical axis represent time [hour] and voltage [V] respectively.

When verifying the charge-discharge characteristics of these lithium ion button batteries, the charge-discharge cycle was set so that the negative-electrode is charged at a constant current of 0.2 mA until the electrode potential becomes 1.5 V vs Li/Li+, and is discharged at a constant current of 0.2 mA until the electrode potential becomes 0.01 V vs Li/Li+.

The first-time discharge capacity of the lithium ion button battery of this embodiment was approx. 6.19 mAh, and the first-time charge capacity was approx. 4.85 mAh. In contrast, the first-time discharge capacity of the lithium ion button battery using comparative MCMB electrodes was approx. 5.91 mAh, and the first-time charge capacity was approx. 5.27 mAh.

Thus, the lithium ion button battery using comparative MCMB electrodes showed a first cycle irreversible capacity loss of 11%, while the lithium ion button battery of this embodiment showed a first cycle irreversible capacity loss of 21%. In addition, the lithium ion button battery of this embodiment showed an irreversible capacity loss of about 1% in the fourth cycle.

The reason for a higher first-time irreversible capacity loss of the lithium ion button battery of this embodiment is considered to be attributable to the presence of active functional groups in the carbon surface of the burned material. This is a general reaction of a carbon electrode formed in the protective solid electrolyte interface (SEI) layer on the carbon electrode surface.

In contrast between Fig. 11 and Fig. 12, the lithium ion button battery of this embodiment is capable of discharging for over 30 hours, while the lithium ion button battery using comparative MCMB electrodes has completed discharging before 30 hours. Therefore, the lithium ion button battery of this embodiment can be said to have a longer running time.

Furthermore, in contrast between Fig. 11 and Fig. 12, the lithium ion button battery of this embodiment has completed charging after approx. 25 hours since it has completed discharging, while the lithium ion button battery using comparative MCMB electrodes has completed charging after approx. 27 hours since it has completed discharging. Therefore, the lithium ion button battery of this embodiment can be said to allow a shorter charging time. This point of view is described below with reference to Fig. 13 and Fig. 14.

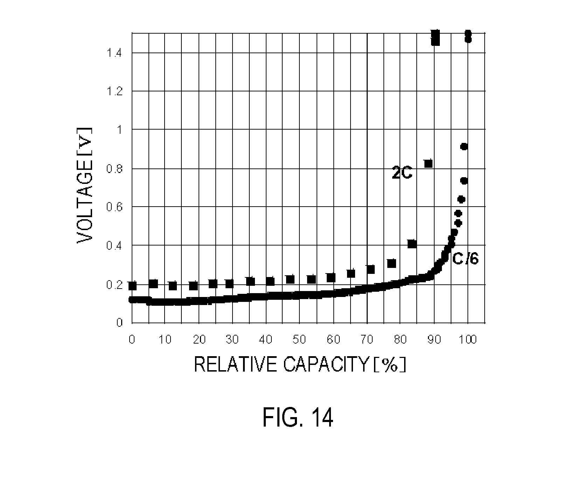

Fig. 13 shows relative capacities at C/6 rate and 2C rate for the electrode using the burned material of soybean hulls of this embodiment. Fig. 14 shows relative capacities at C/6 rate and 2C rate for the MCMB carbon electrode. In Fig. 13 and Fig. 14, ■ plots and ● plots correspond to relative capacities at 2C rate and C/6 rate respectively.

Where, the charging current at 2C rate is 8 mA, and the charging current at C/6 rate is 0.2 mA.

First, looking at the lithium ion button battery using comparative MCMB electrodes shown in Fig. 14, when the relative capacity at C/6 rate was set as 100%, only 88% of the relative capacity was obtained at 2C rate. That means, if setting the relative capacity as 100% when the lithium ion button battery using comparative MCMB electrodes has been charged at a low current (0.2 mA) for a long time (6 hours) until it reaches 1.5 V, charging only 88% of the relative capacity has completed when charged at a high current (8.0 mA) for a short time (30 minutes) until it reaches 1.5V.

In contrast, the lithium ion button battery of this embodiment shown in Fig. 13 showed almost the same relative capacity at both C/6 rate and 2C rate. That is, the lithium ion button battery of this embodiment is capable of charging the relative capacity of 100% regardless of high or low of the charging current. In other words, that means the lithium ion button battery of this embodiment can be charged regardless of high or low of the current, and thus it can be quickly charged fully with a high charging current.

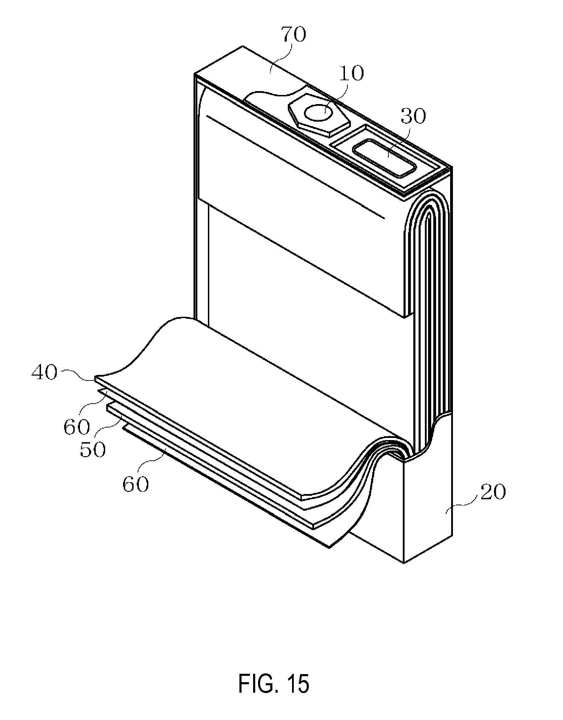

Fig. 15 is a schematic configuration diagram of a so-called rectangular lithium ion battery of this embodiment. Fig. 15 shows a resin cover 70, a positive terminal 10 formed at the top of the resin case 70, a safety valve for releasing the pressure inside the lithium ion battery in the case of increased internal pressure due to deformation etc. of the lithium ion battery, a sheet-like positive-electrode material 40 and negative-electrode material 50, and a separator 60 to isolate between the positive-electrode material 40 and the negative-electrode material 50, and a case 20 that also serves as a negative terminal.

As described above, this embodiment uses the burned material of soybean hulls as an active material for the negative-electrode material 50. The positive-electrode material 40, negative-electrode material 50 and separator 60 are contained in the case 20 in a way that those are impregnated in an electrolyte solution and are rolled up so that the cross-section substantially forms an ellipsoidal shape. Subsequently, it is impregnated in an electrolyte solution, and then the case 20 is covered by the resin case 70 and is sealed by laser welding etc.

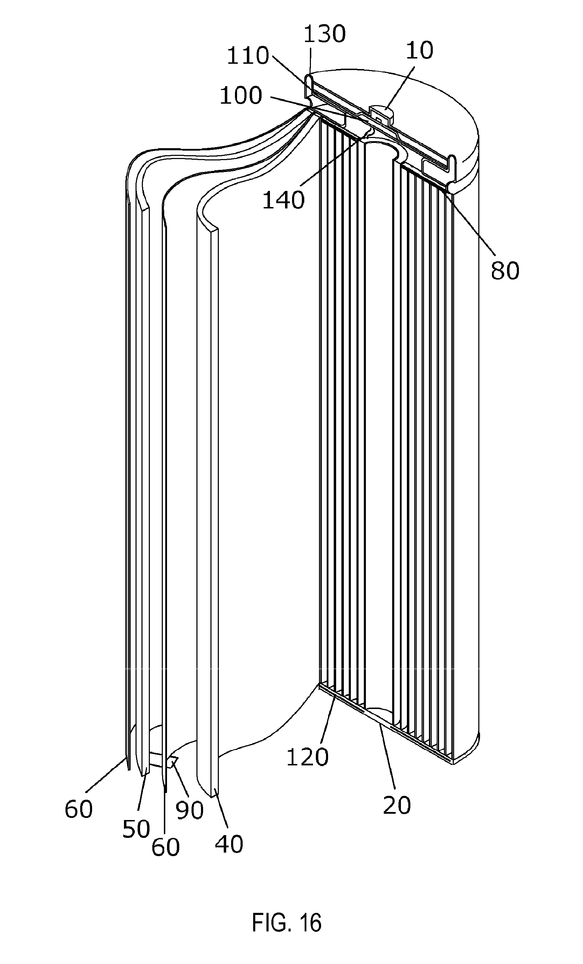

Fig. 16 shows a cylindrical lithium ion battery that is an alternative example of the lithium ion battery shown in Figure 15. Fig. 16 indicates insulating plates 80, 120 attached to the electrode tubs to prevent internal short-circuit, a negative-electrode lead 90 connected to the negative-electrode material 50, a current interruption means 100 for interrupting the current in the case of increased temperature and increased internal pressure due to deformation etc. of the lithium ion battery, a PTC element 110 that increases the internal resistance due to increased temperature for interrupting the current, a packing 130 for securing the sealing of the lithium ion battery, and a positive-electrode lead 140 connected to the positive-electrode material 40, in addition to the parts shown in Fig. 15.

In the case of the lithium ion battery shown in Fig. 16, the burned material of soybean hulls is used as an active material of the negative-electrode material 50. The positive-electrode material 40, negative-electrode material 50 and separator 60 are contained in the case 20 in a way that those are rolled up so that the cross-section substantially forms a round shape. Subsequently, it is impregnated in an electrolyte solution, and then the case 20 is covered by the resin case 70 and is sealed by a press machine etc.

Regarding the burned material of soybean hulls according to this embodiment, the following tests and measurements have been carried out. Here, regarding the burned material of soybean hulls, although those with the median diameter of approx. 30 µm and those with the median diameter of approx. 60 µm were used to carry out several tests and measurements, this range of differences in median diameter did not indicate any differences in the test results and measurement results.

(1) Regarding the burned material of soybean hulls according to this embodiment, the physical properties such as bulk specific gravity, BET specific surface area, and crystallite size were measured. This burned material of soybean hulls was the one burned at 900 °C, and the median diameter was set to 30 µm.

(2) Regarding the burned material of soybean hulls according to this embodiment, whether or not it can be blended with a base material including ethylene propylene diene rubber, and if possible to blend, the content ratio of said burned material against the rubber were measured.

First, the following measurement results were obtained regarding the physical properties.

Bulk specific gravity: approx. 0.2 g/ml to approx. 0.6 g/ml (the highest band of approx. 0.4 g/ml)
BET specific surface area: approx. 4.7 m²/g to approx. 390 m²/g
Crystallite size: approx. 10 Å to approx. 30 Å
Since Samples 1 - 3 are those burned at respective burning temperatures of 900 °C, 1500 °C and 3000 °C, it is found that the BET specific surface area varies depending on the burning temperature.

For example, JPA2005-336017 discloses a porous carbon material with a bulk specific gravity of 0.6 - 1.2 g/cm³. When comparing the above measurement results with those in this publication, the burned material of soybean hulls according to this embodiment has a lower value in the bulk specific gravity. Here, the bulk specific gravity of the burned material of soybean hulls according to this embodiment has been measured in conformity to JIS K-1474.

JPA2007-191389 discloses carbonaceous or graphitic particles for electrodes of non-aqueous secondary battery that have a median diameter of 5 µm - 50 µm and a BET specific surface area of 25 m²/g or below.

JPA2005-222933 discloses carbonaceous particles that have a crystallite size of over 100 nm as a negative-electrode material for lithium battery. When comparing the above measurement results with those in this publication, the burned material of soybean hulls according to this embodiment has a smaller crystallite size, and thus it is evaluated as low-crystalline carbon.
The crystallite size was measured by the Raman spectroscopy.

Next, the measurement results of whether or not being able to blend with a base material such as ethylene propylene diene rubber, and if possible to blend, the content ratio of said burned material against the rubber were found as follows.

Here, No.191-TM TEST MIXING ROLL manufactured by Yasuda Seiki Seisakusho Ltd. was used as an open roll (biaxial kneading machine), and TOYOSEIKI mini TEST PRESS 10 was used as a molding process machine (compacting machine).

For comparison, in addition to the burned material of soybean hulls according to this embodiment, (1) coconut shell activated carbon (granular SHIRASAGI WH2C8/32SS Lot No. M957 manufactured by Japan EnviroChemicals. Ltd.), and (2) carbon black (SUNBLACK285, Lot No. 8BFS6 manufactured by ASAHI CARBON CO., LTD.) were used.

(a) ethylene propylene diene rubber (SUNBLACK 285, Lot No. 0-214-A-3 manufactured by Sumitomo Chemical Co., Ltd.), (b) isoprene (IR-2200 manufactured by Kraton JSR Elastomers K.K.), and (c) polyvinyl chloride resin (ZEST1000Z, Lot No. C60211 manufactured by Shin Daiichi Enbi K.K.) were used.

Blending the burned material of soybean hulls according to this embodiment with a base material was the same as explained above with reference to Fig. 1; and generally stated, when isoprene was used as the base material, it was masticated by the open roll preheated to approx. 90 °C. When PVC was used as the base material, it was masticated by the open roll preheated to approx. 185 °C. Then the burned material of soybean hulls according to this embodiment and others were respectively blended with the base material. This burned material of soybean hulls was the one burned at 900 °C, and the median diameter was set to 30 µm.

Subsequently, the molding process machine was used to process molding for the base material that had been blended with the burned material of soybean hulls according to this embodiment or others under the pressure of 20 MPa for 5 minutes at the temperature of 100 °C under the condition of the processed mold thickness of 2.5 mm.

Hence, regarding the resultant products, the measurement results of whether or not being able to blend with the base material, and if possible to blend, the content ratio of said burned material against the rubber were found as follows.

### 1. Regarding the burned material of soybean hulls according to this embodiment,

(1) In the case that ethylene propylene diene rubber was used as the base material, the content ratio was found to be as much as approx. 400 phr.

(2) In the case that isoprene was used as the base material, the content ratio was found to be as much as approx. 600 phr.

(3) In the case that polyvinyl chloride resin was used as the base material, the content ratio was found to be as much as approx. 350 phr.

2. Regarding coconut shell activated carbon,

(1) In the case that isoprene was used as the base material, the content ratio was found to be approx. 150 phr. However, it was not possible to knead in to 200 phr or more.

(2) In the case that ethylene propylene diene rubber was used as the base material, the content ratio was found to be approx. 150 phr. However, in this case, when this compressed compact was curved, it caused a crack. Moreover, it was not possible to knead in to 200 phr or more.

### 3. Regarding carbon black,

(1) In the case that isoprene was used as the base material, the content ratio was found to be approx. 100 phr. However, in this case, when this compressed compact was curved, it caused a crack. Moreover, it was not possible to knead in to 150 phr or more.

(2) In the case that ethylene propylene diene rubber was used as the base material, the content ratio was found to be approx. 100 phr. However, in this case, when this compressed compact was curved, it caused a crack. Moreover, it was not possible to knead in to 150 phr or more.

As a summary, in contrast to the burned material of soybean hulls according to this embodiment, even though "coconut shell activated carbon" that is in common in terms of being plant-derived carbide and being porous structure was used, a large amount of blending with the base material such as the one obtained by the burned material of soybean hulls according to this embodiment was not recognized. So any one of the burning temperature for the burned material of soybean hulls according to this embodiment, the carbon content attributable thereto, and a lager number of reactive functional residues is possibly contributing to the increased content ratio against the base material.

In the case of petroleum-pitch-derived carbon black, it was found that not only containing the amount of 100 phr for ethylene propylene diene rubber causes a reduced flexibility, but also containing the amount of 100 phr for isoprene causes a reduced flexibility.

It was confirmed that the burned material of soybean hulls according to this embodiment was able to be blended with a base material even if silicon rubber was used as the base material. When reproducibility tests were selectively carried out for various test results etc. explained in this embodiment, it was confirmed that all of them were reproducible.

The lithium ion battery of this embodiment can be applied to the power source for a small electronic device such as mobile computer, digital camera, PDA, video camera, mobile phone, handheld terminal, portable player, cordless phone, and portable game console, etc. and the power source for a large electronic device such as electric vehicle, hybrid vehicle, electric bicycle, wireless application, robot, and submarine.

In addition, the present invention can be applied not only to lithium ion battery, but also to fuel cell. Furthermore, it can be applied not only to negative-electrode active material, but also to positive-electrode active material and separator for which carbon is used.

### BRIEF DESCRIPTION OF THE DRAWINGS

Fig. 1 shows a schematic manufacturing process diagram of the negative-electrode active material of the lithium ion battery of Embodiment 1 according to the present invention.
Fig. 2 shows a chart indicating the result of component analysis based on the ZAF quantitative analysis method for "raw soybean hull" and the "burned material of soybean hull".
Fig. 3 shows Scanning Electron Microscope pictures indicating the result of the tissue observation of "raw soybean hull".
Fig. 4 shows SEM pictures indicating the result of the tissue observation of the "burned material of soybean hull".
   Regarding the above "burned material of soybean hull", Fig. 5 shows an SEM picture of a cross-section of the burned material of soybean hull, which was taken at a magnification of 1500.
Fig. 6 shows a chart of the pore size distribution curve in the gas adsorption process for Sample 1 of Table 1.
Fig. 7 shows a chart of the pore size distribution curve in the gas adsorption process for Sample 2 of Table 1.
Fig. 8 shows a chart of the pore size distribution curve in the gas desorption process for Sample 3 of Table 1.
Fig. 9 shows a chart of the pore size distribution curve in the gas adsorption process for Sample 3 of Table 1.
Fig. 10 shows a relationship between the grain size (µm) of Sample 3 in Table 1 and the difference (%) and the integrated relative particle mass (%).
Fig. 11 shows a first-time charge-discharge curve of the lithium ion button battery of this embodiment.
Fig. 12 shows a first-time charge-discharge curve of the lithium ion button battery using comparative MCMB electrodes.
Fig. 13 shows relative capacities at C/6 rate (charge rate of 30 hours) and 2C rate (charge rate of 30 minutes) for the electrode using the burned material of soybean hulls of this embodiment.
Fig. 14 shows relative capacities at C/6 rate and 2C rate for the MCMB carbon electrode.
Fig. 15 is a schematic configuration diagram of a so-called rectangular lithium ion battery of this embodiment.
Fig. 16 shows a cylindrical lithium ion battery that is an alternative example of the lithium ion battery shown in Figure 15.

## Claims

1. A battery component comprising a burned material of any of soybean hulls, rapeseed meal, cotton hulls, sesame, and cotton seeds.

2. The battery component as claimed in Claim 1, wherein the inner skin of the burned product has a net-like structure.

3. A battery comprising the battery component as claimed in Claim 1.

4. A battery, wherein the battery component is a positive-electrode active material, negative-electrode active material, or a separator located therebetween.
